# EUROPEAN PATENT APPLICATION

(11) **EP 4 410 534 A1**
(43) Date of publication of application: **07.08.2024**
(21) Application number: 22876455.1
(22) Date of filing: 29.09.2022
(51) Int. Cl.: B32B 5/18, B32B 7/023, G02B 5/02

(54) **ARTICLE THAT DIFFUSELY REFLECTS ULTRAVIOLET LIGHT, VISIBLE LIGHT, AND/OR INFRARED LIGHT, AND PRODUCTION METHOD THEREFOR**

(30) Priority: 30.09.2021 JP 2021161976
(71) Applicant: FURUKAWA ELECTRIC CO., LTD., Tokyo 100-8322 (JP)
(72) Inventor: MAROSFOI Botond, 1158 Budapest (HU); VAMOS Csenge, 1158 Budapest (HU); RACZ Ilona, 1158 Budapest (HU); NAKAI Yukako, Tokyo 100-8322 (JP); MIMURA Yu, Tokyo 100-8322 (JP)
(74) Representative: Zacco GmbH
(86) International application number: PCT/JP2022/036457
(87) International publication number: WO 2023/054591

(57) **Abstract**

Provided are an article for diffuse-reflecting ultraviolet rays, visible rays, and/or infrared rays and a method for manufacturing the article. In a manufacturing method comprising (a) a step of contacting a molded article comprising a thermoplastic polymer with a solvent and (b) a step of drying and cooling the molded article contacted with the solvent, an article wherein the article has a layer structure comprising at least one skin layer, at least one porous layer, and a bulk layer in the stated order, and the diffuse reflectance of at least any type of radiation among ultraviolet rays, visible rays, and infrared rays is more than 60% is obtained by satisfying requirements that the solvent is selected from solvents having a boiling point higher than Tc of the thermoplastic polymer, the difference between the Hildebrand solubility parameter of the solvent and the Hildebrand solubility parameter of the thermoplastic polymer is slight, and the temperature of the solvent when the solvent is contacted with the molded article is equal to or higher than Tc of the thermoplastic polymer - 50°C, preferably equal to or higher than Tc - 10°C, and equal to or lower than the boiling point of the solvent.

## Description

### Technical Field

The present invention relates to an article for diffuse-reflecting ultraviolet rays (UV), visible rays (VIS) and/or infrared rays (IR).

### Background Art

Diffuse reflection is surface reflection in which incident light is not reflected at only one angle like specular reflection, but is reflected at various angles. Non Patent Literature 1 discloses that diffuse reflection is obtained by reflection from multiple anisotropic surfaces of polycrystals, porous bodies, microporous bodies, rough surfaces, and the like.

There are various methods for manufacturing diffuse reflection plates for diffuse-reflecting light. Diffuse reflection plates are commonly obtained by surface-roughing reflective surfaces.

The diffuse reflection of visible light is important in many uses. Direct-view displays used in electronic equipment such as instrument panels, portable computer screens, and liquid crystal displays (LCDs) require diffuse reflection rear surfaces for maximizing the image quality and the intensity of images regardless of whether the direct-view displays depend on auxiliary light (backlight or the like) or environmental light. The reflectance is particularly important for direct-view displays with the backlights of battery-driven equipment, and the improvement in reflectance directly affects the downsizing of required light sources, and consequently a reduction in electric power demand.

The diffuse reflectance of ultraviolet rays is important for ultraviolet reactors, UV sterilizers, ultraviolet light sources, and the like.

Conventional techniques known at the time of filing the present application and highly relevant to the present invention are as follows.

Patent Literature 1 discloses a light-reflecting plate comprising a polyolefin resin and a filling material, for example, an inorganic filling material having an average particle size of 0.05 to 1.5 µm at 5 to 75% by weight. It is disclosed that this light-reflecting plate has a porosity of 15 to 60%, is formed with at least a white polyolefin film oriented uniaxially, has a total light reflectance (in the wavelength range of 400 to 700 nm) of 95% or more, changes in size by at most 1.5% in the case where the light-reflecting plate is left to stand at 70°C for 300 hours, and has a melting start temperature of 70°C or more.

Patent Literature 2 discloses an optical element to be used for a display and forgery prevention. Microstructures provided on a substrate and nanostructures provided on the microstructures (surface having a hierarchical structure) have an optical effect here. Such surface structuralization is mechanically formed, for example, by surface patterning such as embossing.

Patent Literature 3 discloses a white reflecting film for a backlight, comprising a covering layer containing spherical particles on at least one surface of a white substrate film. As these spherical particles, particles having a volume average particle size in the range of 8 to 40 µm and comprising an acrylic resin or a nylon resin (polyamide) are used in Examples.

Patent Literature 4 discloses a diffuse reflection material wherein a polymer is mixed with a diluent, heating these leads to the phase separation therebetween to form a porous polymer sheet, and the application of force to this sheet changes the thickness thereof to obtain the diffuse reflection material. It is disclosed that the thus obtained reflection material is porous, and the surface thereof is rough.

Patent Literature 5 discloses a diffuse reflection plate to be used in a backlight and the like and the manufacturing thereof. A cooling roll for embossing is used in Examples.

Patent Literature 6 discloses a device for diffuse-reflecting visible light with nanofibers having diameters of less than 1000 nm.

Patent Literature 7 relates to a method for manufacturing a reflecting plate, and discloses, for example, that beads having diameters of 0.1 to 3 µm are immobilized on the substrate with a polymer to manufacture the surface of the reflecting plate. It is disclosed that each bead has a size different from the sizes of beads adjacent thereto.

Patent Literature 8 discloses that the use of an acrylic resin composition that can be melt-processed enables manufacturing a reflecting plate without requiring any substrate.

Patent Literature 9 relates to a reflecting plate for diffuse-reflecting visible light, and discloses that a binder layer containing a material that diffuse-reflects visible light is provided on one surface of a nonwoven fabric.

Patent Literature 10 discloses that a film manufactured by solvent casting is used as a reflecting plate for a liquid crystal display (LCD).

### Document List

### Patent Literatures

Patent Literature 1: European Patent Application Publication No. 1637905
Patent Literature 2: International Publication No. WO 2019/140527
Patent Literature 3: International Publication No. WO 2011/105294
Patent Literature 4: U.S. Patent No. 6,780,355
Patent Literature 5: U.S. Patent No. 6,898,012
Patent Literature 6: U.S. Patent No. 9,228,716
Patent Literature 7: U.S. Patent No. 5,917,567
Patent Literature 8: International Publication No. WO 2014/018301
Patent Literature 9: U.S. Patent Application Publication No. 2008/0080055
Patent Literature 10: European Patent Application Publication No. 2388641

### Non Patent Literature

Non Patent Literature 1: A. K. R. Choudhury, Colour and appearance attributes. Principles of Colour and Appearance Measurement, pp. 103-143 (2014)

### Summary of Invention

### Technical Problem

In view of the above-mentioned situation, an object of the present invention is to provide an article, comprising a thermoplastic polymer material, wherein the article can diffuse-reflect ultraviolet rays (UV), visible rays (VIS), and/or infrared rays (IR) even though the article does not comprise a different material such as an inorganic filling material including glass beads or silica, or a nanofiber that is required for diffuse-reflecting light according to the conventional techniques, but makes it difficult or impossible to recycle the polymer material and even though the article does not have a covering or the like comprising a different material from the material forming the article, and a method for manufacturing such an article.

### Solution to Problem

The constitution of the present invention is as follows.
[1] An article for diffuse-reflecting ultraviolet rays, visible rays, and/or infrared rays, comprising a thermoplastic polymer, wherein the article has a layer structure comprising at least one skin layer, at least one porous layer formed in contact with the skin layer, and a bulk layer formed in contact with the porous layer in the stated order, or the article has a layer structure comprising at least one porous layer and a bulk layer formed in contact with the porous layer in the stated order.
[2] The article according to [1], wherein the at least one skin layer, the at least one porous layer, and the bulk layer comprise an identical thermoplastic polymer.
[3] The product according to [1] or [2], wherein crystallinity of the bulk layer is 25% or more and 60% or less.
[4] The article according to any one of [1] to [3], wherein the thermoplastic polymer is a crystalline or semicrystalline thermoplastic polymer selected from the group consisting of polyethylene (PE), polypropylene (PP), polyamide (PA), polyacetal (POM), polyethylene terephthalate (PET), polybutylene terephthalate (PBT), polylactic acid (PLA), syndiotactic polystyrene (SPS), and polyvinylidene fluoride (PVDF), or the thermoplastic polymer is a mixture or a blend of two or more of the thermoplastic polymers, or a mixture or a blend of the thermoplastic polymer and another thermoplastic polymer different from the thermoplastic polymer.
[5] The article according to [4], wherein the crystalline thermoplastic polymer is a homopolymer of polypropylene.
[6] The article according to [4], wherein the crystalline polymer is a block copolymer of polypropylene.
[7] The article according to [4], wherein the crystalline or semicrystalline polymer is polyvinylidene fluoride.
[8] The article according to any one of [1] to [7], wherein one or more additives selected from the group consisting of a nucleating agent, a flame retardant, an antioxidant, an ultraviolet absorber, a stabilizer, a bulking agent, an antistatic agent, a lubricant, a dispersant, a toughening agent, a coloring agent, a diffuse reflection agent, an electroconductive filler, and a thermoconductive filler are added to the polymer.
[9] The article according to any one of [1] to [8] wherein diffuse reflectance of at least any type of radiation among ultraviolet rays, visible rays, and infrared rays is more than 60%.
[10] The article according to any one of [1] to [9], wherein a thickness of the at least one skin layer is 5 to 700 µm.
[11] The article according to [10], wherein the thickness of the at least one skin layer is 5 to 500 µm.
[12] The article according to any one of [1] to [11], wherein a thickness of the at least one porous layer is 20 to 1000 µm.
[13] The article according to [12], wherein the thickness of the at least one porous layer is 20 to 700 µm.
[14] The article according to any one of [1] to [13], wherein the article has a shape of a flat film, a sheet, or a plate; a shape of a film, a sheet, or a plate having a folded portion; or a three-dimensional shape.
[15] A method for manufacturing the article for diffuse-reflecting ultraviolet rays, visible rays, and/or infrared rays according to any one of [1] to [14], comprising:
   (a) a step of contacting a molded article comprising a thermoplastic polymer with a solvent, and
   (b) a step of drying and cooling the molded article contacted with the solvent, wherein the solvent is selected from solvents having a boiling point higher than crystallization temperature (Tc) of the thermoplastic polymer, a difference between a Hildebrand solubility parameter of the solvent and a Hildebrand solubility parameter of the thermoplastic polymer is less than 7.5 MPa^{1/2}, and temperature of the solvent when the solvent is contacted with the molded article is equal to or higher than the crystallization temperature (Tc) of the thermoplastic polymer - 50°C and equal to or lower than a boiling point of the solvent.
[16] The method according to [15], wherein the temperature of the solvent when the solvent is contacted with the molded article is equal to or higher than the crystallization temperature (Tc) of the thermoplastic polymer - 10°C and equal to or lower than the boiling point of the solvent.
[17] The method according to [15] or [16], wherein time for contacting the solvent with the molded article is 30 seconds to 10 minutes.
[18] The method according to any one of [15] to [17], wherein the temperature for contacting the solvent with the molded article is 90 to 160°C.
[19] The method according to any one of [15] to [18], wherein a skin layer formed on a surface of the article is removed subsequently to the step (b).

### Effects of Invention

An article comprising a thermoplastic polymer material according to the present invention can diffuse-reflect infrared rays; preferably visible rays and infrared rays; and further preferably ultraviolet rays, visible rays, and infrared rays at a high reflectance of, for example, more than 60%, preferably more than 70%, further preferably more than 80%, and particularly more than 90% without containing a different material from the material forming the article or having a covering or the like comprising a different material.

According to the present invention, the above-mentioned article can be manufactured simply by going through a simple process in which the molded article comprising the thermoplastic polymer is brought into contact with the solvent under predetermined conditions and then dried.

### Brief Description of Drawings

[Fig. 1] A figure showing a cross section of a layer structure on the surface of an article according to the present invention.
[Fig. 2] A figure showing an electron microscope photograph of a skin layer on the surface of the article according to the present invention (left) and an electron microscope photograph of a porous layer from which the skin layer is removed (right).
[Fig. 3] Diagrams showing sectional views of aspects in which the article according to the present invention is sheet-like.

### Description of Embodiments

Hereinafter, an article for diffuse-reflecting ultraviolet rays, visible rays, and/or infrared rays according to the present invention and a method for manufacturing the article will be described in detail.

The article for diffuse-reflecting ultraviolet rays, visible rays, and/or infrared rays according to the present invention comprises a crystalline or semicrystalline thermoplastic polymer. As the thermoplastic polymer, for example, polyethylene (PE), polypropylene (PP), polyamide (PA), polyacetal (POM), polyethylene terephthalate (PET), polybutylene terephthalate (PBT), polylactic acid (PLA), syndiotactic polystyrene (SPS), and polyvinylidene fluoride (PVDF) can be used. According to the present invention, a mixture or a blend of two or more of the thermoplastic polymers can be used. If the main ingredient (the continuous phase of the blend in the case of the blend) of the mixture or the blend is the thermoplastic polymer, a mixture or a blend of the thermoplastic polymer and another thermoplastic polymer different from the thermoplastic polymer can also be used. The polymer may be a homopolymer or a copolymer. A block copolymer, for example, a polypropylene block copolymer comprising propylene and ethylene, is advantageous from the viewpoint of the diffuse reflectance. Particularly, it is advantageous from the viewpoint of the diffuse reflectance in the total range including ultraviolet rays (UV, VIS, and IR) to use a block copolymer or a polymer blend having a sea-island structure. The "sea-island structure" means, for example, a structure in which a copolymer component or a mixture component (for example, polyethylene) is discontinuously dispersed (in the shape of islands) in a region in which polypropylene (homoPP) is continuous (sea) in the case of a block copolymer containing polypropylene as the main ingredient. In the case of the polymer blend, two or more incompatible polymers having different chemical structures are melt-kneaded to obtain a "sea-island structure" comprising a continuous sea region and island regions discontinuously dispersed in the region of the sea. Examples include a block copolymer comprising propylene and ethylene or a polymer blend in which polypropylene and polyethylene are mixed. As an example of the copolymer component or the mixed component, an olefin compound such as methacrylic acid, methyl methacrylate, ethyl methacrylate, butyl methacrylate, methyl acrylate, ethyl acrylate, butyl acrylate, or vinyl acetate; or a combination of these polymers can be used besides the above-mentioned ethylene. As the thermoplastic polymer that can be used according to the present invention, for example, TIPPLEN H681F, H649FH, H145F, K793, K597, K691, K199, K395A, and K948, or the like can be used. TIPPLEN K793, K597, K691, K199, K395A, and K948 are polypropylene block copolymers obtained from propylene and ethylene. If the article is expected to be used outside in exposure to direct sunlight or used as a plate for reflecting ultraviolet rays for a long period, it is advantageous to use PVDF, which is resistant to sunlight and ultraviolet rays and does not raise fear that the article is embrittle or deteriorated as compared with versatile polymers.

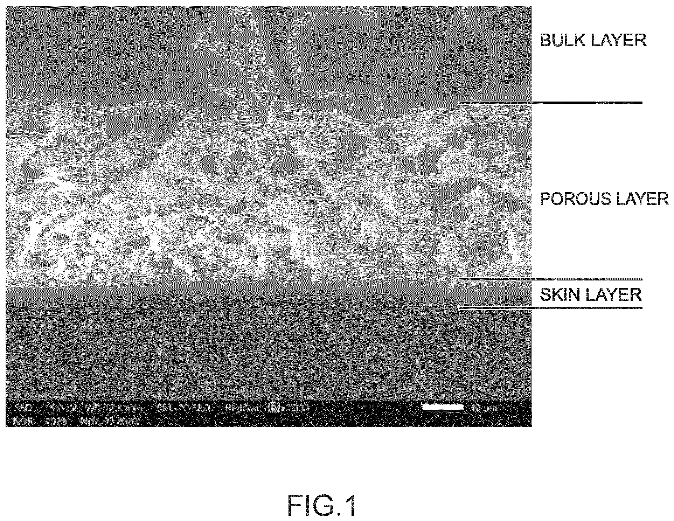

The article for diffuse-reflecting ultraviolet rays, visible rays, and/or infrared rays according to the present invention has a layer structure comprising at least one skin layer, at least one porous layer formed in contact with the skin layer, and a bulk layer formed in contact with the porous layer in the stated order. Fig. 1 shows an electron microscope photograph of a sectional view of the article according to the present invention.

The "skin layer" according to the present invention is a layer formed on the surface of the article by contacting the molded article comprising the thermoplastic polymer with the solvent using the method according to the present invention. The article according to the present invention in the state of comprising this skin layer can diffuse-reflect ultraviolet rays, visible rays, and/or infrared rays at a high reflectance of preferably more than 60%, further preferably more than 70%, particularly preferably more than 80%, and especially more than 90%.

The skin layer can also be exfoliated from the porous layer thereunder. If the skin layer is exfoliated, the article according to the present invention has a layer structure comprising at least one porous layer and a bulk layer formed in contact with the porous layer in the stated order.

The diffuse reflectance on the surface of the article according to the present invention can be measured with a LAMBDA 1050+ UV/Vis/NIR Spectrophotometer (using a 150-mm integrating sphere with the position fixed to 8°), manufactured by PerkinElmer Japan G.K. The reflectance is measured at various wavelengths. The measurement results can be expressed by the relative reflectance to the reflectance of the Spectralon 1050 calibration sample defined as 100%.

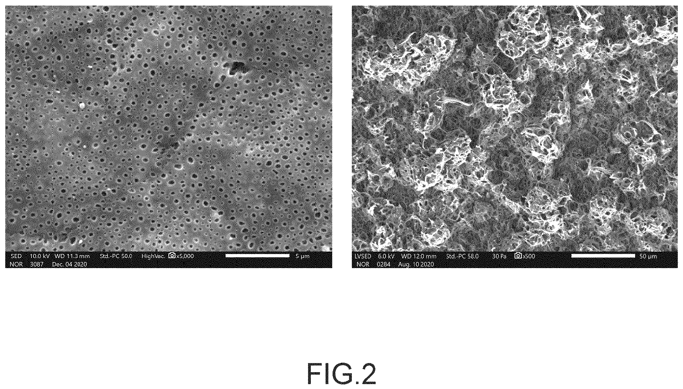

The "porous layer" according to the present invention is a layer that is porous and formed by contacting the molded article comprising a thermoplastic polymer with the solvent according to the method according to the present invention, and is present under the skin layer formed on the surface of the article. The openings (pores) of the porous layer are formed by transcrystallization using the TIPS (thermally induced phase separation) technique and/or the partial dissolution of the thermoplastic polymer forming the article. According to the present invention, it has been confirmed that if the thermoplastic polymer forming the article is a copolymer having the above-mentioned "sea-island structure", the sizes of the openings (pores) in the porous layer can be reduced, and the diffuse reflectance on the short wavelength (UV) side is enhanced in the article according to the present invention thereby. The surface of the porous layer from which the skin layer is removed exhibits a hierarchical crystal structure formed with spherulitic microstructures and nanostructures. Fig. 2 shows electron microscope photographs of the surface of the skin layer and the surface of the porous layer from which the skin layer is removed. The porous layer from which the skin layer is removed can also diffuse-reflect ultraviolet rays, visible rays, and/or infrared rays, particularly advantageously all the radiation in the ranges of ultraviolet rays, visible rays, and infrared rays in the same way as the surface of the skin layer at a high reflectance, namely at a reflectance preferably more than 60%, further preferably more than 70%, particularly preferably more than 80%, and especially preferably more than 90%.

The "bulk layer" according to the present invention is a layer in which the original composition and the structure of the molded article comprising the thermoplastic polymer before the contact with the solvent are maintained. In other words, the bulk layer is a portion that is not affected even by contacting the thermoplastic molded article with the solvent using the method according to the present invention, and is a layer that comprises the thermoplastic polymer, and is present under or inside the porous layer in the article after the solvent treatment. Although the crystallinity of the bulk layer is usually 25 to 60%, it is also conceivable that a preferable range of this crystallinity varies depending on the type of the thermoplastic polymer forming the bulk layer. For example, the range is 25 to 50% in a block copolymer of polypropylene (PP), 30 to 50% in a homopolymer of PP, and 35 to 60% in a homopolymer of polyvinylidene fluoride (PVDF).

According to the present invention, the molded article comprising the thermoplastic polymer is treated with the solvent by the predetermined method to form the skin layer, the porous layer, and the bulk layer. All these layers therefore comprise an identical thermoplastic polymer. Accordingly, the boundary between the skin layer and the porous layer is clearly distinguishable, and the skin layer can also be exfoliated from the porous layer. Meanwhile, these layers do not contain a different material from the thermoplastic polymer forming the article, and are not formed with a covering or the like. The description of the porous layer and the bulk layer is the same as the description of the skin layer and the porous layer. The skin layer can be removed directly after the article according to the present invention is manufactured, or can be left unremoved until directly before the article is used for the purpose of, for example, protecting the surface or the article. The removed skin layer also has a hierarchical crystal structure comprising microstructures and nanostructures on a surface that contacted the porous layer in the same way as the porous layer. Accordingly, the exfoliated skin layer can also be used as a film for diffuse-reflecting ultraviolet rays, visible rays, and/or infrared rays.

According to the present invention, the thickness of the at least one skin layer can vary in a wide range depending on conditions such as the types of the thermoplastic polymer and the solvent, and the time and the temperature for contacting the molded article comprising the thermoplastic polymer with the solvent. The thickness of the at least one skin layer is 5 to 700 µm and preferably 5 to 500 µm. The thickness of the skin layer may however fall below a thickness in the range or exceed a thickness in the range.

The thickness of the at least one porous layer can vary in a wide range depending on conditions such as the types of the thermoplastic polymer and the solvent, and the time and the temperature for contacting the molded article comprising the thermoplastic polymer with the solvent in the same way as that of the skin layer. The thickness of the at least one porous layer is 20 to 1000 µm and preferably 20 to 700 µm. The thickness of the porous layer may however fall below a thickness in the range, or may exceed a thickness in the range. According to the present invention, the ratio of the thickness of the at least one skin to the thickness of the at least one porous layer may be 0.5 to 400%, and is preferably 0.76 to 325%. According to the present invention, the thickness of the at least one skin to the thickness of the at least one porous layer may be constant, or may vary in one molded article, for example, one sheet. If the ratio of the thickness of at least one skin to the thickness of the at least one porous layer varies in the one molded article, the variation thereof may be at most around 275%.

According to the present invention, it is preferable from the viewpoint of recycling the article that a different material from the material forming the article be not contained in the thermoplastic polymer forming the article. According to the present invention, additives to be commonly used in the plastic field, for example, one or more additives selected from the group consisting of a nucleating agent, a flame retardant, an antioxidant, an ultraviolet absorber, a stabilizer, a bulking agent, an antistatic agent, a lubricant, a dispersant, a toughening agent, a coloring agent, a diffuse reflection agent, an electroconductive filler, and a thermoconductive filler may however be added to the thermoplastic polymer forming the article. The additives are merely exemplifications, and other additives may be added to the thermoplastic polymer instead of or besides these additives. For example, a TiOz filler can be added to the thermoplastic polymer as a diffuse reflection agent to further improve the diffuse reflectance of the article according to the present invention.

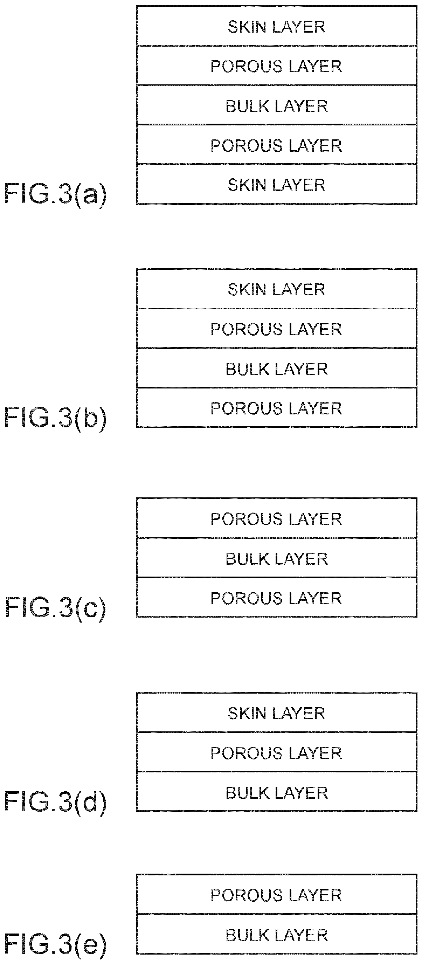

The article for diffuse-reflecting ultraviolet rays, visible rays, and/or infrared rays according to the present invention may be of any shape. For example, the article according to the present invention may have a shape of a flat film, a sheet, or a plate; a shape of a film, a sheet, or a plate having a folded portion; or a three-dimensional shape. A molded article having a thickness of 1 mm or more is referred to as a plate or a board. According to JIS (the Japanese Industrial Standards), a film means a filmy article having a thickness of less than 250 µm, and a sheet means a thin plate-like article having a thickness of 250 µm or more. Fig. 3 exemplifies aspects in which the article according to the present invention is sheet-like or plate-like. According to the present invention, as shown in Fig. 3 (a), the porous layers and the skin layers may be formed on both surfaces of the bulk layer. As shown in of Fig. 3 (c), a porous layer and a skin layer may be formed on only one surface of the bulk layer. After the layer structure shown in Fig. 3 (a) is obtained, a skin layer on one side is exfoliated to obtain a structure shown in Fig. 3 (b), and the skin layers on both surfaces can be exfoliated to manufacture an article having the porous layers exposed on both the surfaces thereof as shown in Fig. 3 (c). Alternatively, the layer structure shown in Fig. 3(d) is obtained, and the skin layer can be then exfoliated to manufacture an article comprising only a porous layer on one surface of the article shown in Fig. 3 (e). If both surfaces of the sheet-like or plate-like article are contacted with the solvent by the method according to the present invention described hereinafter, the structures shown in Figs. 3 (a), (b), and (c) are obtained. If only one surface of the sheet-like or plate-like article is contacted with the solvent by the method according to the present invention, the structures shown in Figs. 3 (d) and (e) are obtained. These aspects are however merely exemplifications, and are not intended to limit the present invention.

The present invention further provides a method for manufacturing the articles for diffuse-reflecting ultraviolet rays, visible rays, and/or infrared rays.

According to the present invention, the article can be manufactured by a method comprising: at least
(a) a step of contacting a molded article comprising a thermoplastic polymer with a solvent, and
(b) a step of drying and cooling the molded article contacted with the solvent.

Any solvent satisfying two requirements that the solvent has a boiling point higher than the crystallization temperature (Tc) of the thermoplastic polymer and that the difference between the Hildebrand solubility parameter (SP value) of the solvent and the Hildebrand solubility parameter of the thermoplastic polymer be less than 7.5 MPa^{1/2} can be used. The difference between SP value of the solvent and the SP value of the thermoplastic polymer is preferably less than 7.2 MPa^{1/2}, more preferably less than 5.25 MPa^{1/2}, and further preferably 5 MPa^{1/2} from the viewpoint of forming a surface having a satisfactory diffuse reflectance. As such a solvent, for example, n-pentane, n-hexane, n-heptane, n-octane, n-nonane, n-decane, n-undecane, n-dodecane, diethyl ether, cyclohexane, xylene, decalin, ethyl acetate, butyl acetate, benzene, methyl ethyl ketone, acetone, pyridine, diethylamine, butyl isobutyrate, butyl n-butyrate, butyl chloride, isobutyl ether, isobutyl formate, isodecyl acrylate, diacetone alcohol, methyl ether, tetralin, acetonitrile, acrylic acid, benzyl alcohol, 1,4-butanediol, 2,3-butylene carbonate, butyrolactone, chloroacetonitrile, diethylene glycol, diethyl sulfone, ethylacetamide, ethylenediamine, formic acid, phenylhydrazine, tolylene diisocyanate, acetic acid, dimethylsulfoxide (DMSO), nitrobenzene, phenol, o-chlorophenol, 1,1,1,3,3,3-hexafluoro-2-propanol, o-cresol, toluene, chlorobenzene, 1,2-dichlorobenzene, chloroform, 1,4-dioxane, tetrahydrofuran, or a mixture of two or more of these solvents can be used. The solvents are merely exemplifications, and another solvent that satisfies the above-mentioned two requirements can also be used instead of or besides these solvents.

The SP value of the solvent is for estimating the interaction between multiple substances by value, and is used as an index of the solubility of the substance. The Hildebrand SP value can be determined based on existing database information, and can be estimated using the UV measurement, the degree of swelling, the cloud point, the theoretical calculation, and the like of the solution (unit: MPa^{2/1}).

If polypropylene is used as the thermoplastic polymer, a preferable solvent is xylene, decalin, or butyl acetate from the viewpoint of reducing the difference between the SP values. If polyethylene is used as the thermoplastic polymer, a preferable solvent is decalin. If PVDF is used as the thermoplastic polymer, a preferable solvent is DMSO.

As long as the temperature of the solvent when the solvent is contacted with the molded article comprising the thermoplastic polymer, for example, the molded article having a shape of a film, a sheet, or a plate in the step (a) is equal to or higher than the crystallization temperature (Tc) of the thermoplastic polymer - 50°C, preferably equal to or higher than the crystallization temperature (Tc) of the thermoplastic polymer - 10°C, and equal to or lower than the boiling point of the solvent (Tc of thermoplastic polymer - 50°C, preferably Tc of thermoplastic polymer - 10°C, < temperature of solvent during treatment in step (a) ≤ boiling point of solvent), the solvent may be in a liquid phase or a gas phase. A preferable temperature range is around 90 to 160°C, and a more preferable range is around 110 to 150°C from the viewpoint of the diffuse reflectance of the surface of the article and the working efficiency. The entire surface of the molded article comprising the thermoplastic polymer may be contacted with the solvent, or only a part of the molded article, for example, only one surface of the sheet-like molded article, may be contacted therewith as necessary.

The time for contacting the molded article comprising the thermoplastic polymer with the solvent in the step (a) is not particularly limited. This contact time also depends on the types of the thermoplastic polymer and the solvent to be used, the temperature for contacting the molded article with the solvent, and the process efficiency, and it is preferable that the contact time be at least 30 seconds. This contact time is usually around 30 seconds to 10 minutes from the viewpoint of forming a continuous exfoliatable skin layer while obtaining a satisfactory diffuse reflection surface.

It is preferable from the viewpoint of the process efficiency to preheat the molded article to be contacted with the solvent before a step (a). The preheating temperature is not particularly limited, and it is preferable that the preheating temperature be equal to or lower than the temperature for contacting the molded article with the solvent from the viewpoint of the process efficiency.

In the step (b) after the step (a), the solvent is removed from the molded article contacted with the solvent at predetermined treatment temperature in the step (a), the molded article is dried and cooled. The drying temperature does not have the lower limit value during the drying in the step (b). The temperature for drying the molded article may be ambient temperature or room temperature, and it is advantageous from the viewpoint of forming of a satisfactory skin layer that the drying temperature be lower than the Tc of the thermoplastic polymer forming the molded article by at least 20°C, preferably at least 30°C. It may be preferable that the drying in the step (b) be performed by the same or different drying means at an identical temperature or different temperatures multiple times from the viewpoint of controlling the formation of the skin layer. Though the drying means and the drying temperature to be used in the method according to the present invention are not particularly limited, it is preferable from the viewpoint of the process efficiency that the temperature for one or more drying steps before the final drying step do not exceed the temperature of the final drying step.

The method for manufacturing the article for diffuse-reflecting ultraviolet rays, visible rays, and/or infrared rays according to the present invention may be performed in a batch aspect or in a continuous aspect. Whether it is performed in either aspect depends on the shape, the manufacturing facilities, or the like of the molded article. As long as the method according to the present invention can be performed, the aspect is not particularly limited.

Hereinafter, the article according to the present invention will be described based on the Examples in detail, but the present invention is not limited to the aspect according to these Examples.

### Examples

### [Example 1]

A sheet was molded from a polypropylene homopolymer (TIPPLEN H681F, produced by MOL GROUP in Hungary, crystallization temperature Tc: 109°C) by extrusion. The extrusion was performed with a co-rotating double-screw extruder (TSA Industriale Srl in Cernobbio, Italy, D = 32 mm, L/D = 40), and the temperature profiles were set at 190°C, 200°C, 200°C, 200°C, 200°C. The die temperature was adjusted to 200°C. The rotational speed of the double-screw extruder was adjusted to 60 rotations/minute (60 min⁻¹), and the rate of feed was adjusted to 6 kg/hour. A slot die having a thickness of 1 mm was used. The sheet obtained by the extrusion was immersed in a bath of xylene (isomer mixture, CAS number: 1330-20-7, industrial grade, acquired from VWR International Ltd.) at 120°C for 30 seconds. The sheet was then dried at ambient temperature in a drying furnace.

### [Example 2]

The sheet obtained from a polypropylene homopolymer (TIPPLEN H681F, produced by MOL GROUP in Hungary, crystallization temperature Tc: 109°C) by extrusion in the same way as in Example 1 was immersed in a bath of xylene (isomer mixture, CAS number: 1330-20-7, industrial grade, acquired from VWR International Ltd.) at 120°C for 60 seconds. The sheet was then dried at ambient temperature in a drying furnace.

### [Example 3]

The sheet was treated in the same way as in Example 2. After the drying, a skin layer formed on the surface of the sheet was removed.

### [Example 4]

Although the sheet was treated in the same way as in Example 2, the temperature of the solvent was 110°C.

### [Example 5]

A sheet obtained from a polypropylene block copolymer (TIPPLEN K691, produced by MOL GROUP in Hungary, block copolymer of propylene and ethylene, crystallization temperature Tc: 120°C) by extrusion in the same way as in Example 1 was immersed in a bath of xylene (isomer mixture, CAS number: 1330-20-7, industrial grade, acquired from VWR International Ltd.) at 110°C for 60 seconds. The sheet was then dried at ambient temperature in a drying furnace.

### [Example 6]

A sheet obtained from a polypropylene block copolymer (TIPPLEN K793, produced by MOL GROUP in Hungary, block copolymer of propylene and ethylene, crystallization temperature Tc: 111°C) by extrusion in the same way as in Example 1 was immersed in a bath of xylene (isomer mixture, CAS number: 1330-20-7, industrial grade, acquired from VWR International Ltd.) at 110°C for 60 seconds. The sheet was then dried at ambient temperature in a drying furnace.

### [Example 7]

A sheet obtained from a polypropylene block copolymer (TIPPLEN K793, produced by MOL GROUP in Hungary, block copolymer of propylene and ethylene, crystallization temperature Tc: 111°C) by extrusion in the same way as in Example 1 was immersed in a bath of xylene (isomer mixture, CAS number: 1330-20-7, industrial grade, acquired from VWR International Ltd.) at 120°C for 30 seconds. The sheet was then dried at ambient temperature in a drying furnace. After the drying, a skin layer formed on the surface of the sheet was removed.

### [Example 8]

A polyvinylidene fluoride sheet (PVDF, Simona 030001921) was immersed in a bath of DMSO (CAS number: 67-68-5, purity: 99.0% or more, acquired from VWR International Ltd.) at 110°C for 180 seconds. The sheet was then dried at ambient temperature in a drying furnace.

### [Comparative Example 1]

A sheet obtained from a polypropylene random copolymer (TIPPLEN R780, produced by MOL GROUP in Hungary, random copolymer of propylene and ethylene, crystallization temperature Tc: 97.8°C) by extrusion in the same way as in Example 1 was immersed in a bath of xylene (isomer mixture, CAS number: 1330-20-7, industrial grade, acquired from VWR International Ltd.) at 110°C for 60 seconds. The sheet was then dried at ambient temperature in a drying furnace.

### [Comparative Example 2]

A sheet obtained from a polypropylene block copolymer (TIPPLEN K691, produced by MOL GROUP in Hungary, block copolymer of propylene and ethylene, crystallization temperature Tc: 120°C) by extrusion in the same way as in Example 1 and not treated with any solvent.

### [Comparative Example 3]

A sheet obtained from a polypropylene block copolymer (TIPPLEN K793, produced by MOL GROUP in Hungary, block copolymer of propylene and ethylene, crystallization temperature Tc: 111°C) by extrusion in the same way as in Example 1 and not treated with any solvent.

### [Comparative Example 4]

A sheet obtained from a polypropylene homopolymer (TIPPLEN H681F, produced by MOL GROUP in Hungary, crystallization temperature Tc: 109°C) by extrusion in the same way as in Example 1 and not treated with any solvent.

### [Results]

The thermoplastic polymers used in these Examples and Comparative Examples, and the crystallization temperatures Tc and the melting temperatures Tm thereof, the temperatures of the solvent bath (treatment temperature), the time for the immersion in the solvent bath (treatment time), and the diffuse reflectances of ultraviolet rays (at 222 nm and 273 nm), visible rays (at 500 nm and 600 nm), and infrared rays (at 1600 nm and 2000 nm) were summarized in the following Table 1. The method for measuring the diffuse reflectances is as follows:

The diffuse reflectances on the surface of the articles according to the present invention were performed using a LAMBDA 1050+ UV/Vis/NIR Spectrophotometer (using a 150-mm integrating sphere with the position fixed at 8°), manufactured by PerkinElmer Japan G.K. The reflectances were measured at the above-mentioned various wavelengths. The measurement results were expressed relative reflectances to the reflectance of the Spectralon 1050 calibration sample defined as 100%.

In the "Evaluation" of Table 1, a reflectance of less than 50% at a wavelength was evaluated as "Poor", a reflectance of 50% or more and 60% or less at a wavelength was evaluated as "Good", and a reflectance of more than 60% at a wavelength was evaluated as "Excellent".

**[Table 1]**

| | Polymer | | | Treatment conditions | | | | Evaluation | | | Reflectance (%) | | | | | |
|---|---|---|---|---|---|---|---|---|---|---|---|---|---|---|---|---|
| | | Crystallization temperature Tc | Melting temperature Tm | Surface-treated or not | Skin layer is removed or not. | Treatment temperature (°C) | Treatment time (second) | UV | VIS | IR | 222nm | 273nm | 500nm | 600 nm | 1600 nm | 2000 nm |
| Example 1 | PP homopolymer H681F | 109 | 167 | Treated | Not removed | 120 | 30 | Poor | Excellent | Good | 23 | 76 | 90 | 87 | 67 | 50 |
| Example 2 | PP homopolymer H681F | 109 | 167 | Treated | Not removed | 120 | 60 | Poor | Excellent | Good | 26 | 47 | 95 | 93 | 75 | 59 |
| Example 3 | PP homopolymer H681F | 109 | 167 | Treated | Removed | 120 | 60 | Poor | Excellent | Excellent | 27 | 58 | 95 | 93 | 76 | 62 |
| Example 4 | PP homopolymer H681F | 109 | 167 | Treated | Not removed | 110 | 60 | Poor | Excellent | Excellent | 40 | 70 | 92 | 91 | 77 | 64 |
| Example 5 | PP block copolymer K691 | 120 | 164 | Treated | Not removed | 110 | 60 | Excellent | Excellent | Excellent | 82 | 91 | 93 | 93 | 79 | 64 |
| Example 6 | PP block copolymer K793 | 111 | 164 | Treated | Not removed | 110 | 60 | Excellent | Excellent | Excellent | 84 | 91 | 90 | 90 | 76 | 60 |
| Example 7 | PP block copolymer K793 | 111 | 164 | Treated | Removed | 120 | 30 | Excellent | Excellent | Excellent | 65 | 86 | 94 | 93 | 81 | 69 |
| Example 8 | PVDF Simona 030001921 | 144 | 170 | Treated | Not removed | 110 | 180 | Excellent | Excellent | Excellent | 5 | 91 | 94 | 95 | 85 | 75 |
| Comparative Example 1 | PP random copolymer R780 | 978 | 142 | Treated | Unremovable | 110 | 60 | Poor | Poor | Poor | - | - | - | - | - | - |
| Comparative Example 2 | PP block copolymer K691 | 120 | 164 | Not treated | - | - | - | Poor | Poor | Poor | 7.3 | 27 | 29 | 27 | 13 | 7 |
| Comparative Example 3 | PP block copolymer K793 | 111 | 164 | Not treated | - | - | - | Poor | Poor | Poor | 7.8 | 27 | 30 | 26 | 11 | 6 |
| Comparative Example 4 | PP homopolymer H681F | 109 | 167 | Not treated | - | - | - | Poor | Poor | Poor | 4 | 4.5 | 15 | 6 | 4 | 2 |

As shown in Table 1, in Examples 1 to 8 according to the present invention, the molded articles comprising the thermoplastic polymers were subjected to the treatment for contacting the molded articles with the solvent having temperature higher than temperature falling below the crystallization temperatures Tc of the polymers by 50°C to form layer structures each comprising the at least one skin layer, the at least one porous layer, and the bulk layer in the stated order on the contact surface with the solvent. Examples 1, 2, 4, 5, 6, and 8 were measured for diffuse reflectance with the skin layers formed on the surfaces left. After the skin layers formed on the surfaces were removed, Examples 3 and 7 were measured for diffuse reflectance. In all the Examples, high diffuse reflectances of visible rays and infrared rays were measured. In Examples 5 to 8, high diffuse reflectances of ultraviolet rays as well as visible rays and infrared rays were measured.

Meanwhile, in Comparative Example 1, using the sheet comprising the random copolymer of polypropylene, no exfoliatable skin layer was formed on the treated surface, and the diffuse reflectances of none of ultraviolet rays, visible rays, and infrared rays could be measured.

Comparative Examples 2 to 4 are sheets comprising the polypropylene homopolymer or the polypropylene block copolymers, used in Examples, and not surface-treated with the solvent. In these Comparative Examples, the diffuse reflectances of all of the ultraviolet rays, visible rays, and infrared rays were measured as certain diffuse reflectances of 30% or less, which were still lower than those of Examples according to the present invention.

### Industrial Applicability

Since an article according to the present invention diffuse-reflects ultraviolet rays, visible rays, and/or infrared rays at high reflectances, the article can be used for many purposes. The article can be used as a diffuse reflection film in direct-view displays used in electronic equipment such as instrument panels, portable computer screens, and liquid crystal displays (LCDs) or in diffuse reflection photoelectric sensors. Since the article according to the present invention has high diffuse reflectance of ultraviolet rays, the efficiency can be improved also in the case of the use in ultraviolet reactors, ultraviolet light sources, and ultraviolet lamps such as bactericidal lamps.

Since the article according to the present invention is high in diffuse reflectance of visible rays, for example, the article can also be used for diffusing projector screens. Alternatively, the article according to the present invention is characterized by enabling diffuse reflection of visible light and/or infrared rays at high reflectance, so that the use of the article according to the present invention, for example, a sheet or a panel, in the external walls and the interior decorations of buildings, also enables obtaining certain visual effects and heat-shielding effects.

## Claims

1. An article for diffuse-reflecting ultraviolet rays, visible rays, and/or infrared rays, comprising:
a thermoplastic polymer,
wherein the article has a layer structure comprising at least one skin layer, at least one porous layer formed in contact with the skin layer, and a bulk layer formed in contact with the porous layer in the stated order, or the article has a layer structure comprising at least one porous layer and a bulk layer formed in contact with the porous layer in the stated order.

2. The article according to claim 1, wherein the at least one skin layer, the at least one porous layer, and the bulk layer are formed of an identical thermoplastic polymer.

3. The product according to claim 1 or 2, wherein crystallinity of the bulk layer is 25% or more and 60% or less.

4. The article according to any one of claims 1 to 3, wherein the thermoplastic polymer is a crystalline or semicrystalline thermoplastic polymer selected from the group consisting of polyethylene (PE), polypropylene (PP), polyamide (PA), polyacetal (POM), polyethylene terephthalate (PET), polybutylene terephthalate (PBT), polylactic acid (PLA), syndiotactic polystyrene (SPS), and polyvinylidene fluoride (PVDF), or the thermoplastic polymer is a mixture or a blend of two or more of the thermoplastic polymers, or a mixture or a blend of the thermoplastic polymer and another thermoplastic polymer different from the thermoplastic polymer.

5. The article according to claim 4, wherein the crystalline or semicrystalline thermoplastic polymer is a homopolymer of polypropylene.

6. The article according to claim 4, wherein the crystalline or semicrystalline polymer is a block copolymer of polypropylene.

7. The article according to claim 4, wherein the crystalline or semicrystalline polymer is polyvinylidene fluoride.

8. The article according to any one of claims 1 to 7, wherein one or more additives selected from the group consisting of a nucleating agent, a flame retardant, an antioxidant, an ultraviolet absorber, a stabilizer, a bulking agent, a plasticizer, an antistatic agent, a lubricant, a dispersant, a toughening agent, a coloring agent, a diffuse reflection agent, an electroconductive filler, and a thermoconductive filler are added to the thermoplastic polymer.

9. The article according to any one of claims 1 to 8, wherein diffuse reflectance of at least any type of radiation among ultraviolet rays, visible rays, and infrared rays is more than 60%.

10. The article according to any one of claims 1 to 9, wherein a thickness of the at least one skin layer is 5 to 700 µm.

11. The article according to claim 10, wherein the thickness of the at least one skin layer is 5 to 500 µm.

12. The article according to any one of claims 1 to 11, wherein a thickness of the at least one porous layer is 20 to 1000 µm.

13. The article according to claim 12, wherein the thickness of the at least one porous layer is 20 to 700 µm.

14. The article according to any one of claims 1 to 13, wherein the article has a shape of a flat film, a sheet, or a plate; a shape of a film, a sheet, or a plate having at least one folded portion; or a three-dimensional shape.

15. A method for manufacturing the article for diffuse-reflecting ultraviolet rays, visible rays, and/or infrared rays according to any one of claims 1 to 14, comprising:
(a) a step of contacting a molded article comprising a thermoplastic polymer with a solvent, and
(b) a step of drying and cooling the molded article contacted with the solvent,
wherein the solvent is selected from solvents having a boiling point higher than crystallization temperature (Tc) of the thermoplastic polymer, a difference between a Hildebrand solubility parameter of the solvent and a Hildebrand solubility parameter of the thermoplastic polymer is less than 7.5 MPa^{1/2}, and temperature of the solvent when the solvent is contacted with the molded article is equal to or higher than the crystallization temperature (Tc) of the thermoplastic polymer - 50°C and equal to or lower than a boiling point of the solvent.

16. The method according to claim 15, wherein the temperature of the solvent when the solvent is contacted with the molded article is equal to or higher than the crystallization temperature (Tc) of the thermoplastic polymer - 10°C and equal to or lower than the boiling point of the solvent.

17. The method according to claim 15 or 16, wherein time for contacting the solvent with the molded article is 30 seconds to 10 minutes.

18. The method according to any one of claims 15 to 17, wherein the temperature for contacting the solvent with the molded article is 90 to 160°C.

19. The method according to any one of claims 15 to 18, wherein a skin layer formed on a surface of the article is removed subsequently to the step (b).
